(19) Europäisches Patentamt / European Patent Office / Office européen des brevets

(11) **EP 2 397 439 A1**

(12) **EUROPEAN PATENT APPLICATION**

(43) Date of publication:
**21.12.2011 Bulletin 2011/51**

(51) Int Cl.:
*C01B 31/00* (2006.01)     *B01J 21/18* (2006.01)
*B01J 37/08* (2006.01)     *C09C 1/56* (2006.01)
*H01M 4/96* (2006.01)

(21) Application number: **10166308.6**

(22) Date of filing: **17.06.2010**

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**
Designated Extension States:
**BA ME RS**

(71) Applicant: **Ruhr-Universität Bochum**
**44801 Bochum (DE)**

(72) Inventors:
• **Xia, Wei**
**44892, Bochum (DE)**

• **Muhler, Martin**
**44797, Bochum (DE)**
• **Schuhmann, Wolfgang**
**44799, Bochum (DE)**
• **Bron, Michael**
**06120, Halle (Saale) (DE)**
• **Masa, Justus**
**44789, Bochum (DE)**

(74) Representative: **von Kreisler Selting Werner**
**Deichmannhaus am Dom**
**Bahnhofsvorplatz 1**
**50667 Köln (DE)**

(54) **Metal-free carbon catalyst for oxygen reduction reactions in alkaline electrolyte**

(57)     This invention relates to a simple method for the synthesis of a highly active metal-free catalyst for oxygen reduction reactions in alkaline media, a catalyst obtainable by said method, an electrode comprising said catalyst and the use of the catalyst and electrode for oxygen reduction reactions in alkaline media.

## Description

This invention relates to a simple method for the synthesis of a highly active metal-free catalyst for oxygen reduction reactions in alkaline media, a catalyst obtainable by said method, an electrode comprising said catalyst and the use of the catalyst and electrode for oxygen reduction reactions in alkaline media.

## Background of the invention

The oxygen reduction reaction (ORR) is a key step in numerous electrochemical processes, such as in low temperature fuel cells [H.A. Gasteiger et al., Appl. Catal. B, 56 (2005) 9] and in chlorine industry [N. Alonso-Vante et al., J. Am. Chem. Soc., 109 (1987) 3251]. The ORR in alkaline media is of great industrial importance [J.S. Spendelow and A. Wieckowski, Phys. Chem. Chem. Phys., 9 (2007) 2654]. As the cathode reaction, the ORR was involved in alkaline fuel cells [R. Holze and W. Vielstich, J. Electrochem. Soc., 131 (1984) 2298] and chlor-alkali electrolysis [L. Lipp et al., J. Appl. Electrochem., 35 (2005) 1015; N. Furuya and H. Aikawa, Electrochim. Acta, 45 (2000) 4251]. The state-of-the-art electrocatalysts for ORR are highly dispersed platinum-based nanoparticles [C.W.B. Bezerra et al., J. Power Sources, 173 (2007) 891]. One of the major challenges for the commercialization of fuel cells is the slow ORR kinetics and the high cost of platinum [B. Wang, J. Power Sources, 152 (2005) 1]. Pt-based electrocatalysts also possess high operating risks in the highly corrosive HCl electrolyte in chlorine industry during unexpected cell shut down [T.J. Schmidt et al., J. Electroanal. Chem., 508 (2001) 41; J.M. Ziegelbauer et al., Electrochim. Acta, 52 (2007) 6282]. Recently, tremendous efforts have been made in reducing or replacing Pt-based electrocatalysts. Transition metal chalcogenides like rhodium sulfides were developed to improve the electrochemical stability of the electrocatalysts under corrosive conditions [C. Jin et al., Electrochimica Acta, 54 (2009) 7186]. As non-precious metal catalysts, transition metal macrocycles containing nitrogen are among the most intensively investigated ORR catalysts [C.W.B. Bezerra et al., Electrochim. Acta, 53 (2008) 4937; M. Lefevre et al., Science, 324 (2009) 71]. Very recently, nitrogen-doped carbon nanotubes were found to be active for ORR, especially in alkaline media [Z. Chen et al., J. Phys. Chem. C, 113 (2009) 21008; S. Kundu et al., J. Phys. Chem. C, 113 (2009) 14302; K. Gong et al., 323 (2009) 760]. In all these electrocatalysts, transition metals were involved either as part of the active centers, e.g. transition metal macrocycles, or in the synthesis of the catalysts, e.g., nitrogen-doped carbon nanotubes. It is sometimes necessary to remove these metal particles from the catalysts for their applications [K. Gong et al., Science, 323 (2009) 760]. Therefore, there is a high demand for the development of low cost non-precious metal electrocatalysts for ORR and preferably low-cost, non-metal electrocatalysts for ORR. In particular, it would be highly desirable to have at disposal an ORR electrocatalyst that does not contain any metal but nevertheless achieves activities that are comparable to conventional Pt-based catalysts. Similarly, it is highly desirable to obtain a method to synthesize an electrocatalyst for the ORR that does not comprise the use of a precious metal or preferably any metal at all. This would obviate a removal step to get rid of metal particles applied during synthesis procedures and additionally considerably reduce production costs.

## Summary of the invention

It has now surprisingly been found that the above stated problems can be solved by a highly active metal-free catalyst for oxygen reduction in alkaline media that is obtainable by a method which comprises admixing polypyridine and carbon black in the absence of metals and heating the resulting mixture above room temperature. Although being metal-free, the obtained electrocatalysts display activities for ORR that are comparable to conventional Pt-based catalysts. The invention thus provides:

(1) A method for the synthesis of a metal-free catalyst, comprising

(a) admixing polypyridine with carbon black, and
(b) heating the resulting mixture;

(2) a metal-free catalyst obtainable by a method of (1) above;
(3) an electrode comprising the metal-free catalyst of (2) above; and
(4) the use of the metal-free catalyst of (2) above and/or the electrode of (3) above for the catalytic of oxygen reduction reactions in alkaline media.

## Description of the Figures

Fig. 1: XRD patterns. (a) Samples prepared at different temperatures with a fixed polypyridine to carbon black ratio of 1:10; (b) Samples prepared at 800°C with different polypyridine to carbon black ratios.

Fig. 2: XP C1s (a) and N 1s (b) spectra of selected samples.

Fig. 3: CVs recorded in argon- (dash line) and oxygen- (solid line) saturated KOH (0.1 M) at a scan rate of 5 mV s$^{-1}$. Sample: polypyridine to carbon black ratio 2:5, treatment at 800°C.

Fig. 4: (a) Linear scan voltammograms recorded at 1600 rpm and a scan rate of 5 mV s$^{-1}$; (b) Tafel plots indicating the low and high current density regions. Samples: polypyridine to carbon black ratios 1:5 and 2:5, treatment at 800°C.

Fig. 5: Chemical structure of poly(3,5-pyridinediyl).

**Detailed Description of the Invention**

The method according to aspect (1) of the invention (hereinafter shortly referred to as "method of the invention") provides for a metal-free catalyst. "Metal-free" according to the present invention refers to an catalyst that contains no or contains only trace amounts (< about 0.1 % by weight) of metal (i.e., total metal including precious metals).

The method of the invention comprises as a first step admixing polypyridine with carbon black. In a second step, the resulting mixture is heated. Hereinafter, "treated thermally" and "heated" is used interchangeably. Preferably, in present invention, the admixing of polypyridine with carbon black or the heating step takes place in the absence of metals. More preferably, both steps take place in the absence of metals.

The polypyridine used in this invention is not limited to one obtained by a specific synthesis method and any type of polypyridine can be applied in the method of the invention. The polypyridine can, e.g. be obtained by a dehalogenation polycondensation with Ni(cod)$_2$ catalyst and neutral ligand [T. Yamamoto et al., J. Am. Chem. Soc., 116 (1994) 4832]. Depending on the monomer and ligand, polypyridine according to the present invention can be obtained in different chemical structures such as poly(pyridine-2,5-diyl) and poly(pyridine-3,5-diyl). The degree of polymerization of polypyridine is normally rather low and thus polypyridine has an average molar mass of about 1000 to about 10000 g mol$^{-1}$, preferably about 3000 to about 4000 g mol$^{-1}$ [T. Yamamoto et al., J. Am. Chem. Soc. 116 (1994) 4832].

The other reaction partner, i.e. carbon black, is usually a highly conductive carbon material. The carbon black that can be used in present invention has a primary particle size of several tens of nanometers, preferably about 10 to about 80 nm, more preferably about 20 to about 40 nm. "Primary particle size" refers to the size of the particles after synthesis of the carbon black and prior to clotting and agglomeration. The BET surface of the carbon black that can be used in present invention is about 200 to about 300 m$^2$g$^{-1}$, preferably about 230 to about 270 m$^2$g$^{-1}$, more preferably about 250 m$^2$g$^{-1}$. "BET surface" refers to the surface that is determined by the widely known and used technique for estimating surface area [S. Brunauer et al., J. Am. Chem. Soc., 60 (1938) 309]. For example, Vulcan XC-72 can be used as carbon black which has been the industry standard imparting electrical conductivity in plastics. It is also widely used as highly conductive support in electrocatalysis. Its typical features include excellent conductivity, good chemical and physical cleanliness and good processability.

In the method of the invention, carbon black and polypyridine are mixed, preferably in a polypyridine to carbon black weight ratio that is at least about 1:10, preferably is from about 1:10 to about 1:1, more preferably is from about 1:5 to about 4:5, most preferably is about 2:5.

The heating takes place under a pressure of about 0.5 to about 2 bar in an inert atmosphere. The inert atmosphere can be a nitrogen, argon or helium atmosphere, and is preferably a helium atmosphere.

During the heating, the mixture is heated to a temperature above room temperature, preferably above 400 °C, more preferably to a temperature from about 600°C to about 1000°C, even more preferably from about 700 to about 900°C and most preferably of about 800°C. Heating the mixture to higher temperatures than 1000 °C is counterproductive due to the release of nitrogen. Heating is performed for at least about 30 min, preferably for a time from about 1 to about 6 h, more preferably for about 3 h.

In a preferred embodiment, the method of the invention comprises admixing poly(pyridine-3,5-diyl) with carbon black with a primary particle size of about 10 to about 80 nm and a BET surface of about 200 to about 300 m$^2$g$^{-1}$ and heating the resulting mixture to about 800°C under an helium atmosphere for about 1 to about 6 h, wherein the weight ratio of poly(pyridine-3,5-diyl) to carbon black in the mixture is from about 1:10 to about 1:1, preferably from about 1:5 to about 4:5, most preferably about 2:5. This embodiment also comprises the metal free catalyst obtained by the method, an electrode comprising the metal free catalyst and its use for the catalysis of oxygen reduction reaction in alkaline media.

In another preferred embodiment, the method of the invention comprises admixing poly(pyridine-3,5-diyl) with carbon black with a primary particle size of about 10 to about 80 nm and a BET surface of about 200 to about 300 m$^2$g$^{-1}$ and heating the resulting mixture to about 800°C under an helium atmosphere for about 1 to about 6 h, wherein the weight ratio of poly(pyridine-3,5-diyl) to carbon black in the mixture is about 1:10 or about 1:5 or about 2:5 or about 4:5 or about 1:1. This embodiment also comprises the metal free catalyst obtained by the method, an electrode comprising the metal free catalyst and its use for the catalysis of oxygen reduction reaction in alkaline media.

In another preferred embodiment, the method of the invention comprises admixing poly(pyridine-3,5-diyl) with carbon black with a primary particle size of about 10 to about 80 nm and a BET surface of about 200 to about 300 m$^2$g$^{-1}$ and heating the resulting mixture to about 600°C under an helium atmosphere for at least about 180 min, wherein the weight ratio of poly(pyridine-3,5-diyl) to carbon black in the mixture is from about 1:10 to about 1:1, preferably from about 1:5 to about 4:5, most preferably about 2:5. This embodiment also comprises the metal free catalyst obtained by the method, an electrode comprising the metal free catalyst and its use for the catalysis of oxygen reduction reaction in alkaline media.

In another preferred embodiment, the method of the invention comprises admixing poly(pyridine-3,5-diyl) with carbon black with a primary particle size of about 10 to about 80 nm and a BET surface of about 200 to about 300 $m^2g^{-1}$ and heating the resulting mixture to about 600°C under an helium atmosphere for about 1 to about 6 h, wherein the weight ratio of poly(pyridine-3,5-diyl) to carbon black in the mixture is about 1:10 or about 1:5 or about 2:5 or about 4:5 or about 1:1. This embodiment also comprises the metal free catalyst obtained by the method, an electrode comprising the metal free catalyst and its use for the catalysis of oxygen reduction reaction in alkaline media.

The treatment described in the method of the invention is actually a carbonization process

The properties of thus obtained catalysts can be investigated by typical analysis methods such as XRD (X-ray diffraction), XPS (X-ray photoelectron spectroscopy) and CV (cyclic voltammetry). XRD (H.P. Klug and L.E. Alexander, X-Ray Diffraction Procedures for Polycrystalline and Amorphous Materials. Second Edition, Wiley & Sons, New York, 1974) was employed to investigate the degree of carbonization of polypyridine. High-resolution XPS (D. Briggs and M.P Seah, Practical Surface Analysis. England: John Wiley & Sons. 1994) can be employed to investigate the amount and type of these nitrogen species in different samples. It was observed by XPS that the thermal treatment of the polypyridine-carbon mixture leads to the formation of nitrogen containing carbon, presumably on the surface of the carbon black substrate. The ORR activity of the samples was investigated using cyclic voltammetry (CV) and rotating disc electrode (RDE) measurements in 0.1 M KOH. Both techniques (CV and RDE) are described in F. Scholz, Electroanalytical Methods, Springer, Berlin, 2nd Ed. 2010.

As outlined above, the ORR activity of the samples was investigated using cyclic voltammetry (CV) and rotating disc electrode (RDE) measurements in 0.1 M KOH. Qualitative CV of catalysts with the same polypyridine loading but different treatment temperatures showed that both the 600°C and the 800°C sample are highly active for ORR and the activity of the 800°C sample is even higher. It is known from XPS studies that the interaction between polymer species and carbon substrate increases with treatment temperatures. Hence, it can be concluded that not only the presence of pyridinic groups, but also their interaction with the substrate is essential for high ORR activities.

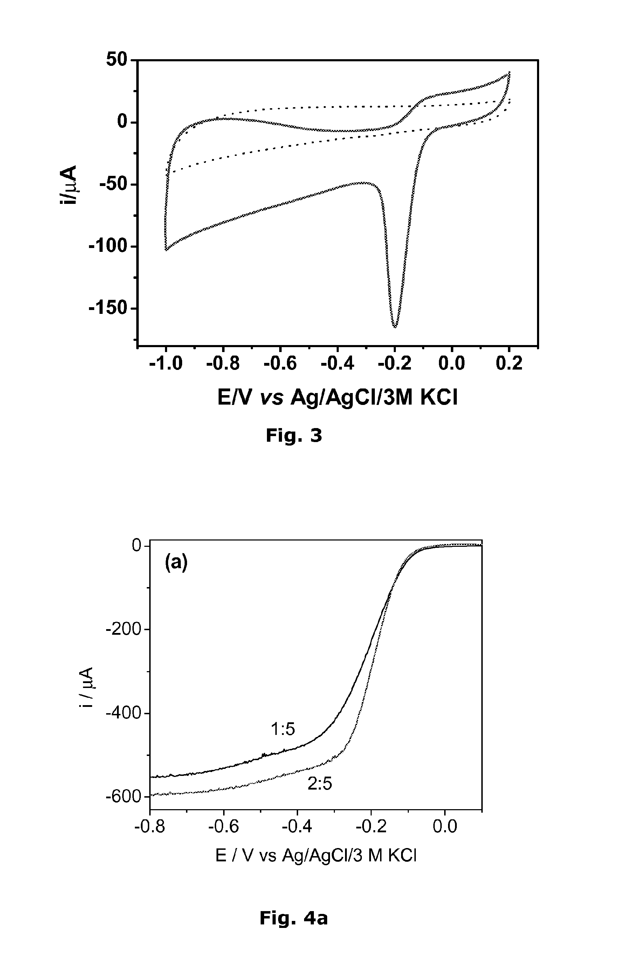

As an example, the CV of the 800°C sample with polypyridine to carbon ratio of 2:5 is shown in Fig. 3. The clear absence and presence of a reduction event starting at about -0.06 V when the electrolyte is saturated with argon and oxygen, respectively, confirms the ORR. The oxidation process commencing at about -0.25 V should be due to oxidation of the peroxide anion $\left(HO_2^-\right)$ as reported by other researchers [J. Liu et al.,

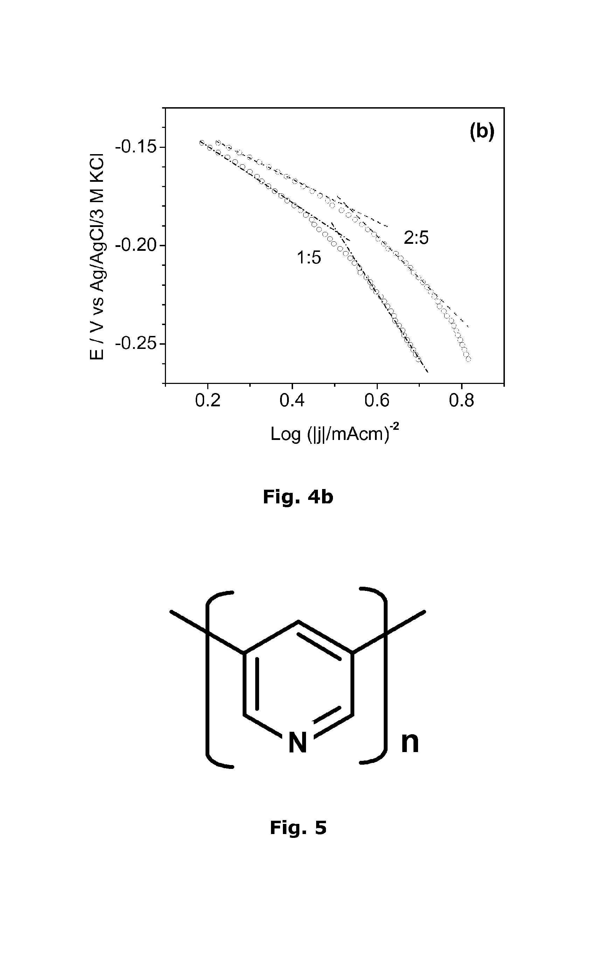

Electrochem. Commun., 10 (2008) 922]. Fig. 4a shows the linear sweep RDE voltammograms of the 800°C samples (1:5 and 2:5) recorded at 5 mV s$^{-1}$ and 1600 rpm. It is clear that the ORR activity increases with the amount of polypyridine with regard to the diffusion limited current. This can be related to a higher density distribution of active sites for ORR. Further comparative analysis is presented by means of the Tafel plots (Fig. 4b). The kinetic currents used to construct the Tafel plots were corrected for mass-transport effects using the expression

$$\dot{i}_k = \frac{\dot{i}_d \dot{i}}{\dot{i}_d - \dot{i}},$$ which applies to first order reactions at RDE [T.J. Schmidt et al., Handbook of Fuel Cells-Fundamentals, Technology and Applications, 2 (2003) 316]. For both samples, two Tafel slopes were obtained: one in the low current density region between -50 mV and -150 mV, and the other in the high current density region between -150 mV and -250 mV, which indicate a change of reaction mechanism in the distinct current density ranges. In the low current density region, the Tafel slope ranged from 63 to 79 mV dec$^{-1}$ and from 89 to 95 mV dec$^{-1}$ for 2:5 and 1:5 samples, respectively. In the high current density region, the Tafel slope varied from 113 to 159 mV dec$^{-1}$ for the catalyst of 2:5, whereas it was from 133 to 230 mV dec$^{-1}$ for the 1:5 sample. For Pt based catalysts, the prevalence of two different sets of Tafel slopes in the different current density regimes is reported to be due to differences in adsorption mechanisms corresponding to Temkin adsorption conditions in the low current density region and to Langmuir adsorption conditions in the high current density region [A. Damjanovic and M.A. Genshaw, Electrochim. Acta, 15 (1970) 1281]. The ranges of the Tafel slopes obtained in our studies are similar to those reported by Chen et al. [Z. Chen et al., J. Phys. Chem. C, 113 (2009) 21008] on nitrogen doped carbon nanotubes in KOH (0.1 M), which are similar to values obtained for Pt/C catalysts. The mechanism and kinetics of oxygen adsorption and subsequent reduction on our catalysts should thus be very similar to what is expected for Pt/C.

The invention is described in more detail in the following examples, which are however, not to be construed as limiting the invention.

**Examples**

Example 1: Catalysts synthesis

Commercial available carbon black (Vulcan® XC72) and polypyridine [poly(3,5-pyridinediyl), Aldrich] were used as received (see Scheme 1 of the chemical formula). Typically, 50 mg of carbon black was thoroughly mixed with 5, 10, and 20 mg of polypyridine in an agate mortar to obtain polypyridine to carbon ratios of 1:10, 1:5 and 2:5, respectively. A horizontal quartz tube reactor with a helium flow of 100 sccm was used for the thermal treatment of the obtained mixtures. The furnace was heated with a ramp of 3°C min$^{-1}$ to 400°C, 600°C or 800°C, and kept for 180 min before cooling down. The samples were collected, stored in glass vials and further mixed by shaking.

Example 2: Characterizations

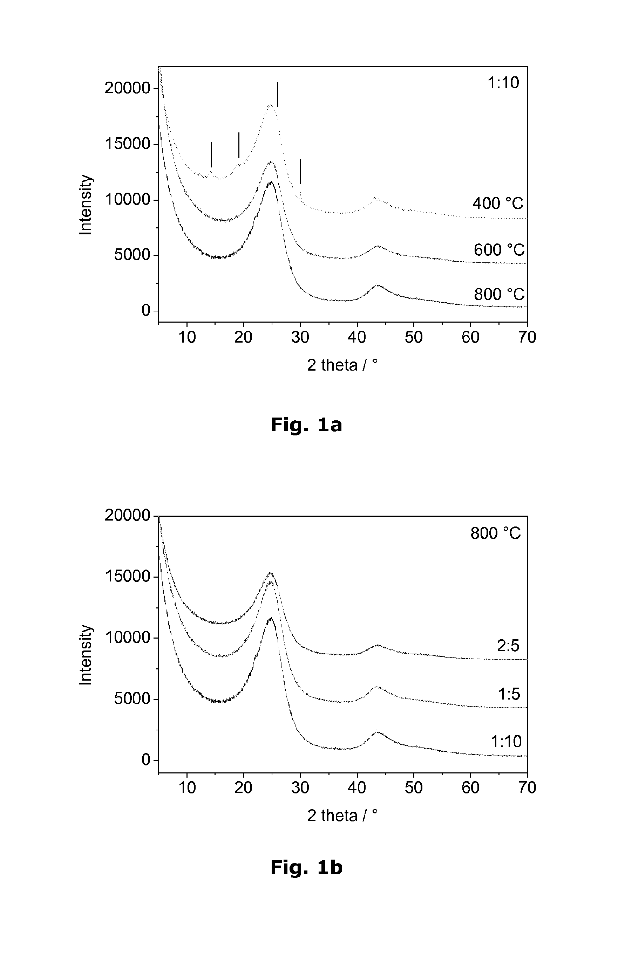

X-ray diffraction (XRD) was measured using a PANalytical theta-theta powder diffractometer equipped with a Cu-K$_\alpha$ radiation source. Scans were run from 5 to 70° with a step width of 0.03° and a collection time of 20 s per step. The XRD patterns of all the samples show similar background with two major contributions at about 25° and 43° originating from the carbon black (Vulcan XC-72) used as substrate (Fig. 1). The sample (polypyridine: carbon black - weight ratio 1:10) treated at 400°C showed several distinct peaks over the carbon background (Fig. 1a), which are believed to be related to the polypyridine in the mixtures. These peaks disappeared in the samples treated at 600°C. For the samples treated at 800°C, only the carbon background was observed, even for the high polymer loading samples (Fig. 1b). It is believed that, due to the typical low melting point and low thermal stability of polymers, the polypyridine or its fragments are believed to be mobile at higher temperatures, leading to relocation of the polymer phase improving its dispersion on the carbon black substrate. Subsequently, solid-solid or solid-liquid or even solid-gas reactions at the carbon-polymer interface must have occurred with further increasing of temperatures. As a result, polypyridine was at least partially carbonized and the interaction between the polymer fragments and carbon was enhanced, leading to enhanced conductivities, which is essential for electrochemical applications.

X-ray photoelectron spectroscopy (XPS) measurements were carried out in an ultra-high vacuum (UHV) set-up equipped with a monochromatic Al K$\alpha$ X-ray source and a high resolution Gammadata-Scienta SES 2002 analyzer. The base pressure in the measurement chamber was maintained at about 7x10$^{-10}$ mbar. A flood gun was applied to compensate for the charging effects. The binding energies were calibrated based on the graphite C 1s peak at 284.5 eV. The CASA XPS program with a Gaussian-Lorentzian (70:30) mixed function and Shirley background was used to analyze the XP spectra.

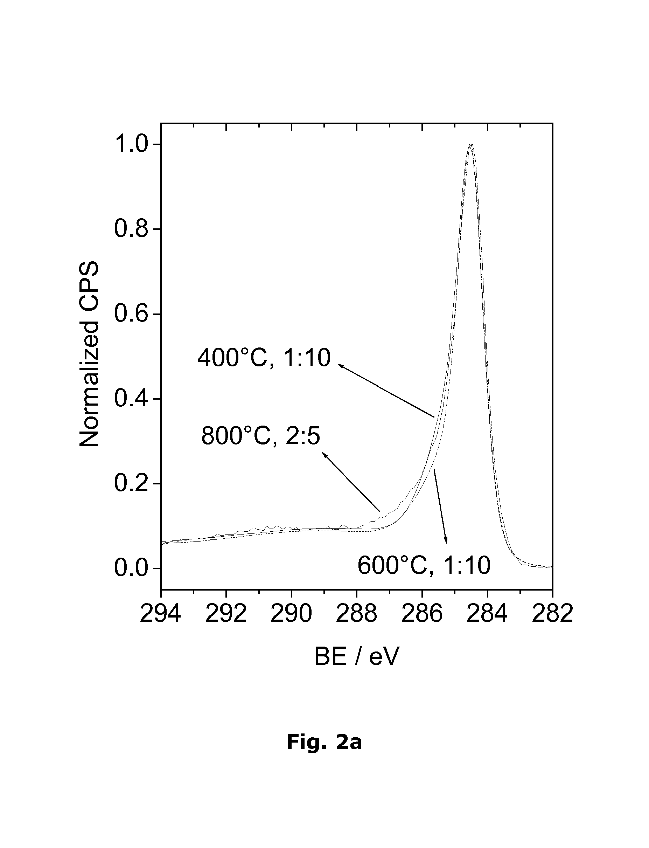

Only carbon, nitrogen and oxygen were detected in the samples in survey scans, excluding the presence of metallic impurities. Since carbon black is the major component of all the samples, the spectra were calibrated by positioning the major C 1s peak at 284.5 eV of graphitic carbon, and the spectra were normalized to corresponding C 1s peaks by intensity. Fig. 2a shows the C 1s spectra of samples treated at 400°C, 600°C, and 800°C. It is known that the C 1s peak of polymers and organics appear normally at higher binding energies than 284.5 eV [E.A. Hoffmann et al., Journal of Molecular Structure: THEOCHEM, 725 (2005) 5; H. Rensmo et al. J. Chem. Phys., 111 (1999) 2744]. The 400°C sample shows a relatively strong shoulder at about 285-286 eV despite its low polypyridine loading (1:10). The shoulder can be related to organic carbon species, i.e. polypyridine or its fragments. The shoulder is weaker in the 600°C sample (1:10), indicating the presence of less organic carbon species and more carbonized polypyridine. The 800°C sample (2:5) shows a strong shoulder at about 285-286 eV like the 400°C sample, and a even stronger shoulder at around 287 eV. Both shoulders can be attributed to C bonded to N on the surface of graphitic carbon [S. Kundu et al., J. Phys. Chem. C, 113 (2009) 14302.], since the carbonization is more complete and the polymer amount is significantly higher in the 800°C sample than the 600°C.

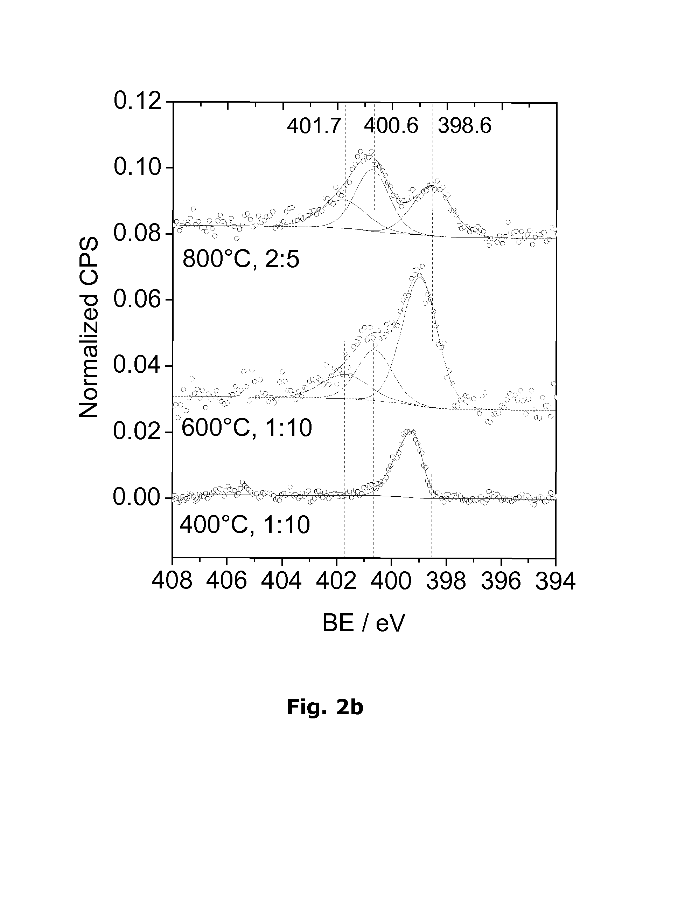

The N 1s spectra of the three samples are shown in Fig. 2b. It is known that the pyridinic nitrogen on graphitic carbon surface appears at about 398.6 eV in the XPS spectra [S. Kundu et al., J. Phys. Chem. C, 113 (2009) 14302; S. Kundu et al., Phys. Chem. Chem. Phys., accepted. (2010)]. Cohen et. al. [M.R. Cohen and R.P. Merrill, Surf. Sci., 245 (1991) 1] showed that the N 1s peak of pyridine weakly bonded to a substrate gave a peak at a higher binding energy of 399.7 eV. Similar peak positions of organic pyridine were also observed in other studies [H. Rensmo et al., J. Chem. Phys., 111 (1999) 2744; P.R. Davies and N. Shukla, Surface Science, 322 (1995) 8]. Greczynski et. al. [G. Greczynski et al., J. Chem. Phys., 114 (2001) 4243] reported even higher binding energies of N 1s in poly(p-pyridine). For the 400°C treated sample, a narrow peak appears at about 399.3 eV in the XPS N 1s spectrum (Fig. 2b). The single narrow peak is believed to originate from a single N species, i.e. the pyridine-type organic N. Thermal treatment at a higher temperature of 600°C led to significant broadening of the N 1s peak (Fig. 2b). Decomposition and reaction must have occurred in the polymer-carbon mixture leading to different N species. Three peaks could be resolved by fitting, at 401.7 eV, 400.6 eV and 399.0 eV respectively. The first two peaks could be assigned to quaternary N (401.7 eV) and pyrrolic N (400.6 eV) respectively [S. Kundu et al., J. Phys. Chem. C, 113 (2009) 14302; S. Kundu et al., Phys. Chem. Chem. Phys., accepted. (2010)]. The third peak shifted to a lower binding energy by 0.3 eV as compared to the 400°C sample, which is believed to be pyridine-type N with enhanced interactions with the surface, for example, from physical contact to chemisorption of the pyridine units on graphitic carbon by n-bonding [P.R. Davies and N. Shukla, Surface Science, 322 (1995) 8]. Treatment at 800°C resulted in nitrogen species fully consistent with nitrogen species observed on graphitic carbon structures [S. Kundu et al., J. Phys. Chem. C, 113 (2009) 14302; S. Kundu et al., Phys. Chem. Chem. Phys., accepted. (2010)], indicating fully embedding of the N species in carbon. In addition to the quaternary and pyrrolic N groups, pyridinic N was observed at 398.6 eV, which is a further shift of 0.4 eV to lower binding energies. The N to C surface atomic ratio of the 800°C sample derived from XPS results amounted to 0.031. 37% of all N species are pyridinic N, as compared to 39% of pyrrolic and 24% of quaternary N groups. In other words, pyridinic N amounts to 1.1 at.% on the surface of the 800°C sample.

Example 3: ORR tests

Electrocatalytic ORR were performed using a μAutolab Type III (Eco Chemie, Utrecht, The Netherlands) in a single compartment glass cell with the conventional three electrodes assembly, in combination with a rotating disc electrode rotator EDI 101 and its speed control unit CTV101 (Radiometer Analytical, France) controlled by NOVA 1.5 software. The working electrode was prepared by dissolving the catalyst powder (2.5 mg) in distilled de-ionized water (200 μl), to which was added 20 μl of a solution of Nafion perfluorinated ionexchange resin (5%) in low molecular weight alcohols/water (Aldrich Chemie GmbH, Steinheim Germany). After ultrasonication of the resulting suspension for about 30 minutes, 3 μl of it was pipetted onto a glassy carbon electrode (Ø 3 mm, HTW Hochtemperatur-Werkstoffe GmbH, Germany) embedded in Teflon then left to dry under ambient conditions. Prior to this, the glassy carbon electrodes were polished on a polishing cloth (Heraeus Kulzer GmbH, Hanau, German) using alumina pastes (Leco, Michigan) in succession of decreasing grain sizes of 3, 1, 0.3 and 0.005 μm to obtain a mirror-like finish. A platinum wire was used as the counter electrode while a Ag/AgCl/3 M KCl electrode served as the reference electrode. Voltammograms were recorded from 0.3 V to -1.0 V in KOH (0.1 M; Mallinckrodt Baker B.V, Deventer, Holland) at a scan rate of 5 mV s$^{-1}$. The electrolytes were purged with either argon or oxygen for at least 20 min before each measurement.

**Claims**

1. A method for the synthesis of a metal-free catalyst, comprising

    (a) admixing polypyridine with carbon black
    (b) heating the resulting mixture.

2. The method of claim 1, wherein steps (a) and/or (b), preferably both steps take place in the absence of metals.

3. The method of claim 1 or 2, wherein the carbon black has

    (i) a primary particle size of 10 to 80 nm, preferably 20 to 40 nm; and/or
    (ii) a BET-surface of 200 to 300 m$^2$g$^{-1}$, preferably 230 to 270 m$^2$g$^{-1}$, most preferably about 250

m$^2$g$^{-1}$.

4. The method according to any one of claims 1 to 3, wherein the polypyridine

    (i) is poly(pyridine-2,5-diyl) or poly(pyridine-3,5-diyl), preferably is poly(pyridine-3,5-diyl); and/or
    (ii) has an average molar mass of 1000 to 10000 g mol$^{-1}$, preferably 3000 to 4000 g mol$^{-1}$.

5. The method according to any one of claims 1 to 4, wherein the weight ratio of polypyridine to carbon black in the mixture is at least 1:10 , preferably from 1:10 to 1:1, more preferably from 1:5 to 4:5, most preferably about 2:5.

6. The method according to any one of claims 1 to 5, wherein step (b) comprises heating the mixture to a temperature above 400 °C, preferably to a temperature from 600 to 1000°C, more preferably from 700 to 900 °C, and most preferably of about 800 °C.

7. The method according to any one of claims 1 to 6, wherein the heating takes place under a pressure of 0.5 to 2 bar in an inert atmosphere, wherein the inert atmosphere is preferably a nitrogen, argon, or helium atmosphere and most preferably is a helium atmosphere.

8. The method according to any one of claims 1 to 7, wherein heating is performed for at least 30 min, preferably from 1 to 6 h, more preferably for about 3 h.

9. A metal-free catalyst obtainable by a method according to any one of claims 1 to 8.

10. An electrode comprising the metal-free catalyst according to claim 9.

11. Use of the metal-free catalyst according to claim 9 or the electrode according to claim 10 for the catalytic oxygen reduction in alkaline media.

**Fig. 1a**

**Fig. 1b**

**Fig. 2a**

**Fig. 2b**

**Fig. 3**

**Fig. 4a**

**Fig. 4b**

**Fig. 5**

Europäisches
Patentamt

European
Patent Office

Office européen
des brevets

# EUROPEAN SEARCH REPORT

Application Number

EP 10 16 6308

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | KUANPING GONG ET AL: "Nitrogen-doped carbon nanotube arrays with high electrocatalytic activity for oxygen reduction" SCIENCE AMERICAN ASSOCIATION FOR THE ADVANCEMENT OF SCIENCE USA, vol. 323, no. 5915, 6 February 2009 (2009-02-06), pages 760-764, XP002604027 ISSN: 0036-8075 * the whole document * ----- | 1-11 | INV. C01B31/00 B01J21/18 B01J37/08 C09C1/56 H01M4/96 |
| A | KUNDU S ET AL: "Electrocatalytic activity and stability of nitrogen-containing carbon nanotubes in the oxygen reduction reaction" JOURNAL OF PHYSICAL CHEMISTRY C AMERICAN CHEMICAL SOCIETY USA, vol. 113, no. 32, 13 August 2009 (2009-08-13), pages 14302-14310, XP002604028 ISSN: 1932-7447 * "Abstract"; "Introduction"; "Experimental section" * ----- | 1-11 | |
| A | EP 2 109 170 A1 (ACTA S P A [IT]) 14 October 2009 (2009-10-14) * paragraphs [0001], [0 18] - paragraph [0024]; figure 1 * ----- | 1-11 | TECHNICAL FIELDS SEARCHED (IPC) C01B B01J C09C H01M |

The present search report has been drawn up for all claims

| Place of search | Date of completion of the search | Examiner |
|---|---|---|
| Munich | 12 October 2010 | Marucci, Alessandra |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

...............................................................................

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 10 16 6308

This annex lists the patent family members relating to the patent documents cited in the above-mentioned European search report.
The members are as contained in the European Patent Office EDP file on
The European Patent Office is in no way liable for these particulars which are merely given for the purpose of information.

12-10-2010

| Patent document cited in search report | Publication date | Patent family member(s) | Publication date |
|---|---|---|---|
| EP 2109170 A1 | 14-10-2009 | WO 2009124905 A1 | 15-10-2009 |

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **H.A. GASTEIGER et al.** *Appl. Catal. B,* 2005, vol. 56, 9
- **N. ALONSO-VANTE et al.** *J. Am. Chem. Soc.,* 1987, vol. 109, 3251
- **J.S. SPENDELOW ; A. WIECKOWSKI.** *Phys. Chem. Chem. Phys.,* 2007, vol. 9, 2654
- **R. HOLZE ; W. VIELSTICH.** *J. Electrochem. Soc.,* 1984, vol. 131, 2298
- **L. LIPP et al.** *J. Appl. Electrochem.,* 2005, vol. 35, 1015
- **N. FURUYA ; H. AIKAWA.** *Electrochim. Acta,* 2000, vol. 45, 4251
- **C.W.B. BEZERRA et al.** *J. Power Sources,* 2007, vol. 173, 891
- **B. WANG.** *J. Power Sources,* 2005, vol. 152, 1
- **T.J. SCHMIDT et al.** *J. Electroanal. Chem.,* 2001, vol. 508, 41
- **J.M. ZIEGELBAUER et al.** *Electrochim. Acta,* 2007, vol. 52, 6282
- **C. JIN et al.** *Electrochimica Acta,* 2009, vol. 54, 7186
- **C.W.B. BEZERRA et al.** *Electrochim. Acta,* 2008, vol. 53, 4937
- **M. LEFEVRE et al.** *Science,* 2009, vol. 324, 71
- **Z. CHEN et al.** *J. Phys. Chem. C,* 2009, vol. 113, 21008
- **S. KUNDU et al.** *J. Phys. Chem. C,* 2009, vol. 113, 14302
- **K. GONG et al.** *J. PHYS. CHEM. C,* 2009, vol. 323, 760
- **K. GONG et al.** *Science,* 2009, vol. 323, 760
- **T. YAMAMOTO et al.** *J. Am. Chem. Soc.,* 1994, vol. 116, 4832
- **S. BRUNAUER et al.** *J. Am. Chem. Soc.,* 1938, vol. 60, 309
- **H.P. KLUG ; L.E. ALEXANDER.** X-Ray Diffraction Procedures for Polycrystalline and Amorphous Materials. Wiley & Sons, 1974
- **D. BRIGGS ; M.P SEAH.** Practical Surface Analysis. John Wiley & Sons, 1994
- **F. SCHOLZ.** Electroanalytical Methods. Springer, 2010
- **J. LIU et al.** *Electrochem. Commun.,* 2008, vol. 10, 922
- **T.J. SCHMIDT et al.** Handbook of Fuel Cells-Fundamentals, Technology and Applications. 2003, vol. 2, 316
- **A. DAMJANOVIC ; M.A. GENSHAW.** *Electrochim. Acta,* 1970, vol. 15, 1281
- **E.A. HOFFMANN et al.** *Journal of Molecular Structure: THEOCHEM,* 2005, vol. 725, 5
- **H. RENSMO et al.** *J. Chem. Phys.,* 1999, vol. 111, 2744
- **S. KUNDU et al.** *Phys. Chem. Chem. Phys.,* 2010
- **M.R. COHEN ; R.P. MERRILL.** *Surf. Sci.,* 1991, vol. 245, 1
- **P.R. DAVIES ; N. SHUKLA.** *Surface Science,* 1995, vol. 322, 8
- **G. GRECZYNSKI et al.** *J. Chem. Phys.,* 2001, vol. 114, 4243